# EUROPÄISCHE PATENTANMELDUNG

(11) **EP 2 098 486 A1**
(43) Veröffentlichungstag der Anmeldung: **09.09.2009**
(21) Anmeldenummer: 09002809.3
(22) Anmeldetag: 27.02.2009
(51) Int. Cl.: C02F 1/66

(54) **Einrichtung zur Aufbereitung und/oder Reinigung von Flüssigkeiten mit einem fließfähigen, insbesondere flüssigen Aufbereitungsmittel**

(30) Priorität: 03.03.2008 DE 102008012290; 03.09.2008 DE 102008045514
(71) Anmelder: Freigeber, Jürgen, 42799 Leichlingen (DE)
(72) Erfinder: Freigeber, Jürgen, 42799 Leichlingen (DE)
(74) Vertreter: Sroka, Peter-Christian

(57) **Zusammenfassung**

Einrichtung zur Aufbereitung und/oder Reinigung einer Verunreinigungen enthaltenden Flüssigkeiten mit einem Aufbereitungsraum zur Aufnahme eines fließfähigen, insbesondere flüssigen Aufbereitungsmittels, der sich in einem einen Boden (2) und Seitenwände aufweisenden Behälter (1) befindet, der einen Flüssigkeitszulauf (9 bzw. 9') und einen Flüssigkeitsablauf (10) aufweist, gekennzeichnet durch
• einen mit Abstand oberhalb des Behälterbodens (2) angeordneten, um eine Achse (12) verschwenkbaren, periodisch in den Behälter (1) entleerbaren Zwischenbehälter (11) für die Aufnahme der durch den Flüssigkeitszulauf (9) zulaufenden Flüssigkeit;
• einen Speicherbehälter (17; 117) für das Aufbereitungsmittel und
• eine dem Speicherbehälter (17; 117) zugeordnete Dosiereinrichtung zur periodischen Abgabe von Aufbereitungsmittel aus dem Speicherbehälter (17; 117) in den Aufbereitungsraum.

## Beschreibung

Die Erfindung betrifft eine Einrichtung gemäß dem Oberbegriff des Patentanspruchs 1.

Der Begriff "Aufbereitung" umfasst Verfahren zum Aufbreiten und/oder Reinigen von Flüssigkeiten jeder Art, z.B. durch Absorption oder Adsorption, Neutralisation, Ausfällen usw..

Der Begriff "Aufbereitungsmittel" steht stellvertretend für insbesondere flüssige aber auch fließfähige, z.B. granulatförmige Mittel, die geeignet sind zum Aufbereiten bzw. Reinigen einer Flüssigkeit durch Adsorption bzw. Absorption, Neutralisation, Ausfällen oder sonstige chemische Umsetzungen von unerwünschten Stoffen, die in der Flüssigkeit in irgendeiner Form enthalten sein können.

Die Erfindung betrifft damit auch Einrichtungen zur Neutralisation von sauren Verbrennungskondensaten mit einem fließfähigen, insbesondere flüssigen Neutralisationsmittel. Saure Verbrennungskondensate entstehen beim Betrieb von gas- oder ölbetriebenen Heizungsanlagen, in denen sich die Abgase im Heizungskessel und im Schornstein abkühlen, wodurch ein Säure und Verbrennungsrückstände enthaltendes Kondensat entsteht. Bevor dieses Verbrennungskondensat z.B. in einen Kanalanschluss geleitet werden kann, muss es gereinigt und neutralisiert werden.

Der Erfindung liegt die Aufgabe zugrunde, eine im Aufbau einfache aber dennoch zuverlässig arbeitende und funktionstüchtige Aufbereitungsanlage für verunreinigte Flüssigkeiten und insbesondere eine Neutralisationseinrichtung zu schaffen, bei der insbesondere ein flüssiges Aufbereitungs- bzw. Neutralisationsmittel verwendet wird.

Zur Lösung dieser Aufgabe ist die erfindungsgemäße Einrichtung, die einen Aufbereitungsraum zur Aufnahme eines fließfähigen, insbesondere flüssigen Aufbereitungsmittels enthält, der sich in einem einen Boden und Seitenwände aufweisenden Behälter befindet, der einen Flüssigkeitszulauf und einen Flüssigkeitsablauf aufweist, gekennzeichnet durch
- einen mit Abstand oberhalb des Behälterbodens angeordneten, um eine Achse verschwenkbaren, periodisch in den Behälter entleerbaren Zwischenbehälter für die Aufnahme der durch den Flüssigkeitszulauf zulaufenden Flüssigkeit;
- einen Speicherbehälter für das Aufbereitungsmittel und
- eine dem Speicherbehälter zugeordnete Dosiereinrichtung zur periodischen Abgabe von Aufbereitungsmittel aus dem Speicherbehälter in den Aufbereitungsraum.

Bevorzugte Ausführungsformen der Erfindung sind in den Unteransprüchen behandelt.

Die Erfindung wird im folgenden anhand der Zeichnungen näher beschrieben:
Figur 1 zeigt in schematisierter Darstellung eine Seitenansicht einer ersten Ausführungsform der erfindungsgemäßen Einrichtung bei fehlender vorderer Seitenwand des Behälters in der Flüssigkeitsaufnahmestellung des Zwischenbehälters;
Figur 2 zeigt eine Ansicht entsprecht Figur 1 in der Entleerungsstellung des Zwischenbehälters;
Figur 3 zeigt eine abgewandelte Ausführungsform der dem Zwischenbehälter zugeordneten Dosiereinrichtung in der Flüssigkeitsaufnahmestellung des Zwischenbehälters;
Figur 4 ist eine schematisierte Darstellung der Ausführurigsform von Figur 3 in der Entleerungsposition des Zwischenbehälters;
Figur 5 zeigt in schematisierter Darstellung eine Stirnansicht der Ausführungsform gemäß Figur 3.

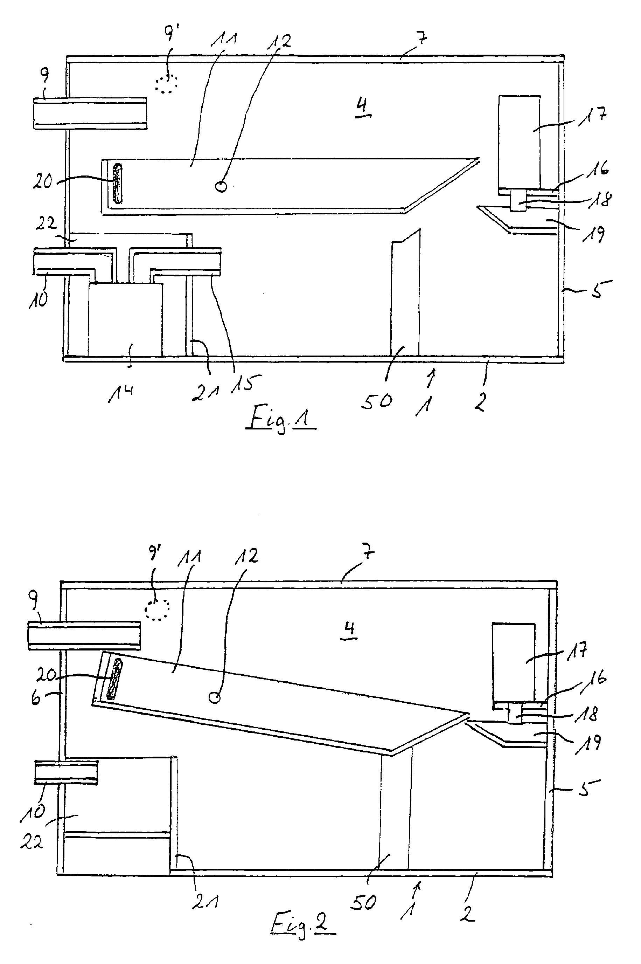

Die in den Figuren 1 und 2 dargestellte Einrichtung enthält einen nur schematisiert in der Seitenansicht dargestellten, im wesentlichen quaderförmigen Behälter 1 mit einem Boden 2, zwei Längswänden, von denen nur die hintere Längswand 4 darstellt ist, zwei Stirnwänden 5 und 6, und einem Deckel 7. Der Flüssigkeitseinlauf 9 und der Flüssigkeitsablauf 10 befinden sich im Bereich der Stirnwand 6 des Behälters, wobei der Flüssigkeitsablauf 10, wie es in den Figuren 1, 2 und 3 dargestellt ist, in unterschiedlichen Abständen von dem Behälterboden 2 liegen kann. Der Flüssigkeitsablauf 9' kann gemäß Figur 2 optional auch in der hinteren Längswand 4 angeordnet sein.

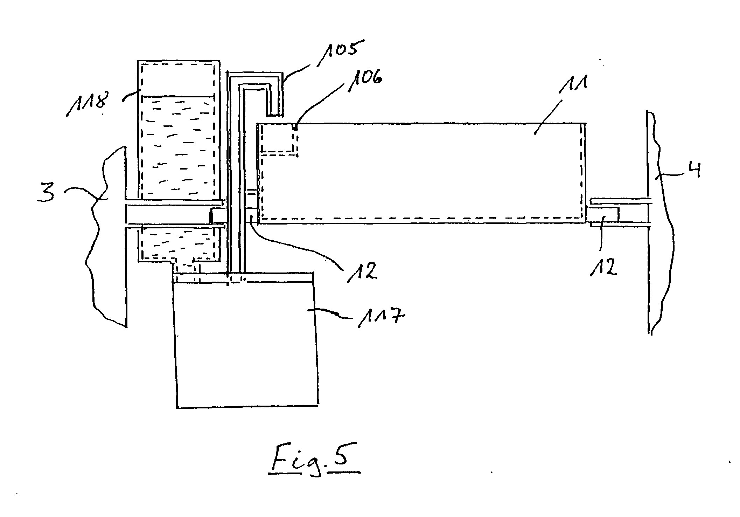

Dem Flüssigkeitsablauf 10 ist eine Flüssigkeitsablaufkammer 22 vorgeschaltet, in der eine Pumpe 14 untergebracht ist, die einerseits an ein Flüssigkeitszulaufrohr 15 und andererseits an den Flüssigkeitsablauf 10 angeschlossen ist. Die in Figur 2 dargestellte Flüssigkeitsablaufkammer 22 kann zur Aufnahme eines Pumpaggregats, z.B. der in Figur 5 dargestellten Art dienen.

In dem Behälter 1 ist mit Abstand oberhalb des Behälterbodens 2 ein periodisch entleerbarer Zwischenbehälter 11 um die Achse 12 schwenkbar gelagert. Die Achse 12 ist in nicht dargestellter Weise entweder an den Behälterlängswänden oder auf einem vom Boden 2 ausgehenden, nicht dargestellten Sockel gelagert.

Der Zwischenbehälter 11 hat gemäß den Figuren 1 und 2 im wesentlichen die Form einer Wanne mit einer außerhalb des Schwerpunktes des gefüllten Zwischenbehälters 11 liegenden Schwenkachse 12. Sobald in diesen Zwischenbehälter 11 durch den Flüssigkeitszulauf 9 ein bestimmtes Flüssigkeitsvolumen eingelaufen ist, kippt der Zwischenbehälter 11 unter Schwerkrafteinfluss um die Achse 12, so dass der Zwischenbehälter 11 schwallartig in die Wanne 19 entleert wird und unter Mitnahme des darin befindlichen Aufbereitungs- oder Neutralisationsmittels aus dieser Wanne 19 in den Hauptbehälter 1 strömt, in dem die Aufbereitung oder Neutralisation erfolgt. Der Behälter 1 hat ein relativ großes Speichervolumen, so dass eine ausreichend lange Verweilzeit der mit dem Aufbereitungs- bzw. Neutralisationsmittels versehenen Flüssigkeit in der Aufbereitungs- bzw. Neutralisationszone gewährleistet ist, bevor die Flüssigkeit über die Trennwand in die Flüssigkeitsablaufkammer strömt.

Im hinteren Bereich des Zwischenbehälters 11 ist z.B. in einer Aufnahmetasche ein Gegengewicht 20 angeordnet, welches dazu beiträgt, den Zwischenbehälter 11 nach dem Entleeren wieder in die in Figur 1 dargestellte Ausgangsposition zurück zu schwenken.

Eine beispielsweise an der Stirnwand 5 angebrachte Halterung 16 dient zur Lagerung eines vorzugsweise auswechselbaren oder nachfüllbaren Speicherbehälters 17 für fließfähiges Aufbereitungs- oder Neutralisationsmittel. Diesem Speicherbehälter 17 ist im Bereich des Behälterauslasses 18 eine übliche, im Einzelnen nicht dargestellte Dosiereinrichtung zugeordnet, derart, dass aus dem Speicherbehälter 17 periodisch jeweils ein vorgegebenes Volumen des Aufbereitungs- oder Neutralisationsmittels in eine unterhalb der Halterung 18 befindliche Wanne 19 abgegeben wird.

Die in dem Behälterauslass 18 befindliche Dosiereinrichtung enthält beispielsweise eine Schwimmerventil, mit dem der Auslass bei einem bestimmten Füllstand in der Wanne 19 verschlossen wird.

Die Schwenkbewegung des Zwischenbehälters 11 wird durch geeignete Anschläge begrenzt, indem er beispielsweise mit seinem hinteren Rand gegen den Flüssigkeitseinlauf 9 zur Anlage kommt, oder sich mit seinem vorderen Ende auf der Wanne 19 abstützt, oder indem er gegen eine auf dem Boden 2 ruhende Säule 50 zur Anlage kommt.

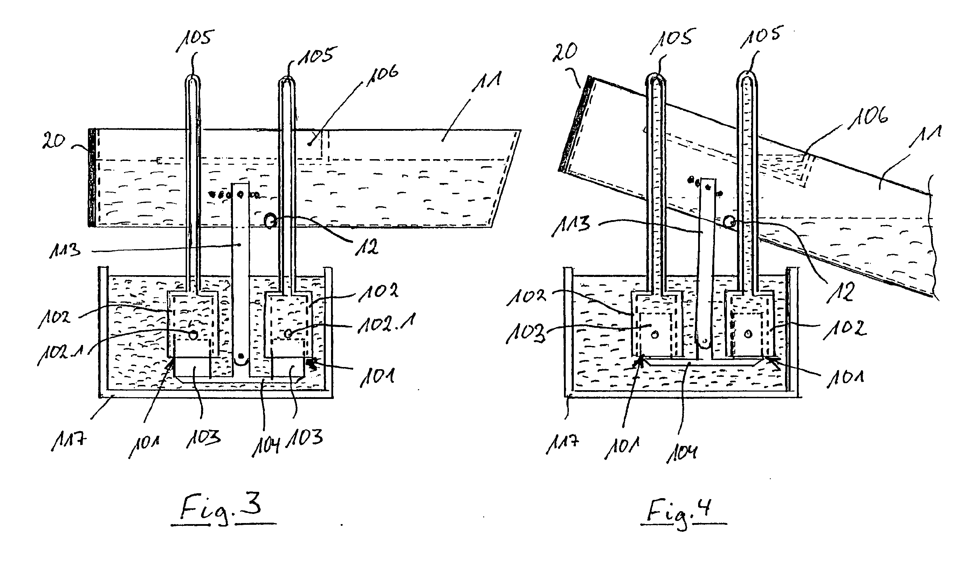

Die in den Figuren 3 und 4 dargestellte Ausführungsform der Erfindung unterscheidet sich von der Ausführungsform gemäß den Figuren 1 und 2 durch die Ausgestaltung der den Zwischenbehälter 11 mit Aufbereitungs- bzw. Neutralisationsmittel beschickenden Dosiereinrichtung.

Diese Dosiereinrichtung enthält ein Pumpaggregat, bestehend aus mindestens einer Kolben-Zylinder-Pumpe 101, deren Hubbewegungen in Abhängigkeit von den Schwenkbewegungen des Zwischenbehälters 11 gesteuert werden. Dieses Pumpaggregat enthält vorzugsweise zwei Kolben-Zylinder-Pumpen 1.1, jeweils bestehend aus einem stationären, mit Aufbereitungsmittel befüllbaren Zylinder 102 und einem Kolben 103. An dem Zwischenbehälter 11 ist außerhalb seiner Schwenkachse 12 als Betätigungselement für das Pumpaggregat eine Schubstange 113 angelenkt, deren freies Ende an einem translatorisch bewegbaren, auf die Kolben 103 einwirkenden Gestänge 104 angelenkt sind. Die Schubstange 113 ist zur Veränderung des Hubweges der Kolben 103 in unterschiedlichen Positionen, dargestellt durch die Anlenkpunkte 110, an den Zwischenbehälter 11 anlenkbar.

Jeder Zylinder 102 ist in einem ein Aufbereitungsmittel aufnehmenden Speicherbehälter 117 gelagert bzw. darin eingetaucht. In der Zylinderwand jedes Zylinders 102 befindet sich mindestens eine Zulauföffnung 102.1, durch die in der in Figur 3 dargestellten Position der Kolben 103 Aufbereitungsmittel in den Zylinder 102 einströmen kann. An jeden Zylinder 102 ist eine Leitung 105 angeschlossen, die oberhalb des Zwischenbehälters 11 in eine innerhalb des Zwischenbehälters 11 angebrachte Rückhaltewanne 106 ausmündet, die so positioniert und gestaltet ist, dass während der in Figur 4 dargestellten Entleerungsposition des Zwischenbehälters 11 durch die Leitungen 105 zugepumptes Aufbereitungsmittel in dieser Rückhaltewanne 106 gespeichert wird.

In Figur 4 ist die Entleerungsposition des Zwischenbehälters 11 dargestellt. Beim Verschwenken des Zwischenbehälters 11 wird die Schubstange 113 nach oben gezogen, wodurch die Kolben 103 nach oben bewegt werden und das Aufbereitungsmittel aus dem Zylinder 102 durch die Leitungen 105 in die Rückhaltewanne 106 gepumpt wird.

Die Zulauföffnungen 102.1 sind derart positioniert, dass sie beim Hochfahren der Kolben verschlossen werden.

In Figur 5 ist die schwenkbare Lagerung des Zwischenbehälters 11 zwischen den Seitenwänden 3 und 4 des ansonsten nicht dargestellten Behälters 1 dargestellt. Gemäß Figur 5 ist dem Speicherbehälter 117 ein Vorratsbehälter 118 für Aufbereitungsmittel vorgeschaltet, aus dem in Abhängigkeit von dem Befüllungsstand in dem Speicherbehälter 117 beispielsweise nach dem bekannten "Hühnertränke-Prinzip" Aufbereitungsmittel in den Speicherbehälter 117 nachfüllbar ist.

## Patentansprüche

1. Einrichtung zur Aufbereitung und/oder Reinigung einer Verunreinigungen enthaltenden Flüssigkeiten mit einem Aufbereitungsraum zur Aufnahme eines fließfähigen, insbesondere flüssigen Aufbereitungsmittels, der sich in einem einen Boden (2) und Seitenwände aufweisenden Behälter (1) befindet, der einen Flüssigkeitszulauf (9) und einen Flüssigkeitsablauf (10) aufweist, **gekennzeichnet durch**
• einen mit Abstand oberhalb des Behälterbodens (2) angeordneten, um eine Achse (12) verschwenkbaren, periodisch in den Behälter (1) entleerbaren Zwischenbehälter (11) für die Aufnahme der **durch** den Flüssigkeitszulauf (9) zulaufenden Flüssigkeit;
• einen Speicherbehälter für das Aufbereitungsmittel und
• eine dem Speicherbehälter zugeordnete Dosiereinrichtung zur periodischen Abgabe von Aufbereitungsmittel aus dem Speicherbehälter in den Aufbereitungsraum.

2. Einrichtung nach Anspruch (1), **dadurch gekennzeichnet, dass** der Zwischenbehälter (11) derart schwenkbar gelagert ist, dass er schwerkraftbedingt in Abhängigkeit von seinem Befüllungsgrad zumindest zum teilweisen Entleeren in seine Entleerungsposition verschwenkbar ist.

3. Einrichtung nach Anspruch 1, **dadurch gekennzeichnet, dass** die Dosiereinrichtung in Abhängigkeit von den Schwenkbewegungen des Zwischenbehälters (11) betätigbar ist.

4. Einrichtung nach Anspruch 3, **dadurch gekennzeichnet, dass** die Dosiereinrichtung ein aus mindestens einer Kolben-Zylinder-Pumpe (101) bestehendes Pumpaggregat (101) ist, und dass jedes Pumpaggregat (101) mindestens einen stationären Zylinder (102) für das Aufbereitungsmittel enthält, und dass die Hubbewegungen jedes Kolbens (103) in Abhängigkeit von den Schwenkbewegungen des Zwischenbehälters (11) steuerbar sind.

5. Einrichtung nach Anspruch 4, **gekennzeichnet durch** ein einerseits an dem Zwischenbehälter (11) und andererseits an dem Pumpaggregat angreifendes Betätigungselement (113).

6. Einrichtung nach Anspruch 5, **dadurch gekennzeichnet, dass** das Betätigungselement eine Schubstange (113) ist, die an dem Zwischenbehälter (11) außerhalb dessen Schwenkachse (11.1) vorzugsweise in unterschiedlichen Positionen anlenkbar ist.

7. Einrichtung nach Anspruch 6, **dadurch gekennzeichnet, dass** die Schubstange (113) an einem translatorisch bewegbaren, auf den / die Kolben (103) einwirkbaren Gestänge (104) angelenkt ist.

8. Einrichtung nach Anspruch 4, **dadurch gekennzeichnet, dass** jeder Zylinder (102) in den Speicherbehälter (11) eingetaucht darin gelagert ist, und dass in der Zylinderwand jedes Zylinders (102) mindestens eine Zuleitungsöffnung (102.1) angebracht ist, die derart positioniert ist, dass sie während des Pumphubs jedes Kolbens (103) verschlossen wird.

9. Einrichtung nach einem der Ansprüche 4 bis 8, dass an jeden Zylinder (102) eine Leitung (105) angeschlossen ist, die oberhalb des Zwischenbehälters (11) ausmündet.

10. Einrichtung nach Anspruch 9, **dadurch gekennzeichnet, dass** in dem Zwischenbehälter (11) eine Rückhaltewanne (106) für durch die Leitung/en (105) zugeführtes Aufbereitungsmittel derart angeordnet ist, dass während des Entleerens des Zwischenbehälters (11) neu zugeführtes Aufbereitungsmittel vorübergehend in dieser Rückhaltewanne (106) gespeichert wird.

11. Einrichtung nach Anspruch 1, **dadurch gekennzeichnet, dass** dem Speicherbehälter (117) ein Vorratsbehälter (118) vorgeschaltet ist, aus dem in Abhängigkeit von dem Befüllungsgrad des Speicherbehälters (117) Aufbereitungsmittel in den Speicherbehälter (117) nachfüllbar ist.

12. Einrichtung nach einem der Ansprüche 1 bis 3 **gekennzeichnet durch** eine Wanne (19) zur Aufnahme des periodisch abzugebenden Aufbereitungsmittels, die dem Zwischenbehälter (11) räumlich so zugeordnet ist, dass sie bei der periodischen Entleerung des Zwischenbehälters (11) ebenfalls entleert wird.

13. Einrichtung nach Anspruch 12, **dadurch gekennzeichnet, dass** der Zwischenbehälter (11) der Wanne (19) so zugeordnet ist, dass er bei seinem Entleeren in Richtung der Wanne (19) kippt und seinen Inhalt in diese Wanne (19) abgibt.

14. Einrichtung nach Anspruch 12 oder 13 , **dadurch gekennzeichnet, dass** der vorzugsweise auswechselbare oder nachfüllbare Speicherbehälter (17) einen Behälterauslass (18) mit zugeordneter Dosiereinrichtung aufweist.

15. Einrichtung nach einem der Ansprüche 1 bis 14, **dadurch gekennzeichnet, dass** an dem Zwischenbehälter (11) ein Gegengewicht (20) zum Rückschenken des Zwischenbehälters (11) aus seiner Entleerungsstellung in seine Flüssigkeitsaufnahmestellung angebracht ist.
